# EUROPEAN PATENT APPLICATION

(11) **EP 4 734 214 A1**
(43) Date of publication of application: **29.04.2026**
(21) Application number: 24893000.0
(22) Date of filing: 12.09.2024
(51) Int. Cl.: H01M 10/0569, H01M 10/0567, H01M 10/052

(54) **ELECTROLYTE FOR LITHIUM METAL BATTERY, LITHIUM METAL BATTERY AND ELECTRIC DEVICE**

(30) Priority: 22.11.2023 CN 202311562654
(71) Applicant: Contemporary Amperex Technology Co., Limited, Ningde, Fujian 352100 (CN)
(72) Inventor: WANG, Yuchun, Ningde, Fujian 352100 (CN); WANG, Hansen, Ningde, Fujian 352100 (CN); FENG, Fuxiang, Ningde, Fujian 352100 (CN); ZHANG, Rupeng, Ningde, Fujian 352100 (CN); WAN, Pan, Ningde, Fujian 352100 (CN)
(74) Representative: Lorenz Seidler Gossel Part. mbB
(86) International application number: PCT/CN2024/118419
(87) International publication number: WO 2025/107841

(57) **Abstract**

The present application relates to an electrolyte solution for a lithium metal battery, a lithium metal battery and an electrical device. The electrolyte solution for a lithium metal battery includes an organic solvent. The organic solvent includes a phosphate compound including a silicon-containing group and at least one phosphate group, where an oxygen atom of at least one phosphorus-oxygen single bond in the phosphate group is connected to a silicon atom of the silicon-containing group by a covalent single bond.

## Description

### CROSS-REFERENCE TO RELATED APPLICATIONS

The present application claims the priority to Chinese Patent Application No. 202311562654.9, entitled "ELECTROLYTE SOLUTION FOR LITHIUM METAL BATTERY, LITHIUM METAL BATTERY AND ELECTRICAL DEVICE" and filed on November 22, 2023, which is incorporated herein by reference in its entirety.

### TECHNICAL FIELD

The present application relates to an electrolyte solution for a lithium metal battery, a lithium metal battery and an electrical device.

### BACKGROUND

Lithium metal batteries have properties such as a high capacity and are therefore widely used in electronic devices such as a mobile phone, a notebook computer, an electromobile, an electric vehicle, an electric airplane, an electric ship, an electric toy car, an electric toy ship, an electric toy airplane, and an electric tool.

However, the performance of the current lithium metal batteries in low-temperature and high-temperature cycling is still poor.

### SUMMARY

The present application provides an electrolyte solution for a lithium metal battery, a lithium metal battery and an electrical device. The low-temperature and high-temperature cycling performance of the lithium metal battery of the present application can be improved.

In a first aspect, an embodiment of the present application provides an electrolyte solution for a lithium metal battery, where the electrolyte solution for a lithium metal battery includes an organic solvent, the organic solvent includes a phosphate compound, the phosphate compound includes a silicon-containing group and at least one phosphate group, and an oxygen atom of at least one phosphorus-oxygen single bond in the phosphate group is connected to a silicon atom of the silicon-containing group by a covalent single bond.

Therefore, the phosphate group in the embodiments of the present application can capture combustion free radicals such as hydrogen free radicals, hydroxyl free radicals, etc., thereby blocking the chain reaction of free radicals, such that the combustion process cannot be performed due to the lack of combustion free radicals, reducing the risk of continuous combustion of the electrolyte solution, achieving flame retardance or non-flammability of the electrolyte solution, and improving the thermal stability of the electrolyte solution, thereby improving the reliability of the use of lithium metal batteries. The oxygen atom in the phosphorus-oxygen single bond and the silicon atom in the silicon-containing group can be connected by a form of a covalent single bond to form a silicon-oxygen bond Si-O. The silicon-oxygen bond can participate in the formation of the SEI film, undergo a polymerization reaction to form an organic polymer, and increase the toughness of the SEI film. During the charging and discharging process of a lithium metal, the volume of lithium metal changes with a force applied to the SEI film, the SEI film is not easily broken due to the excellent toughness, which allows the lithium metal to be deposited uniformly and does not easily results in lithium dendrites. Moreover, the above-mentioned organic polymer in the SEI film is highly resistant to reduction and does not easily decompose. As a result, the SEI film can have a good protective function with respect to the negative electrode plate, reduce the risk of side reactions between the lithium metal and electrolyte solution, and thus improve the low-temperature and high-temperature cycling performance of lithium metal batteries.

In some embodiments, at least one of the silicon-containing group and the phosphate group includes an ether bond. Ether bonds can participate in the film-forming reaction of the SEI film, further improving the stability of the SEI film, thereby improving the low-temperature and high-temperature cycling performance of lithium metal batteries.

In some embodiments, the phosphate compound includes a compound represented by Formula A, 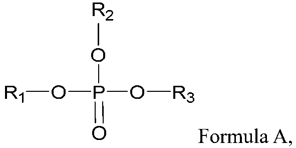 in Formula A,
R₁ to R₃ each independently include a substituted or unsubstituted alkyl group, a substituted or unsubstituted alkoxy group, a substituted or unsubstituted aryl group, a substituted or unsubstituted aryloxy group, a substituted or unsubstituted phosphoryl group, a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group;
where at least one of R₁ to R₃ includes a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group.

In some embodiments, the compound represented by Formula A includes at least one of a compound represented by Formula A-Ia to a compound represented by Formula A-IVb,

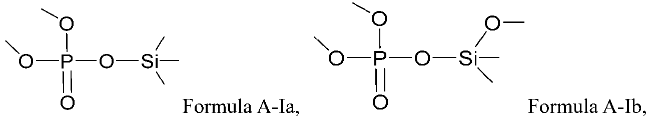

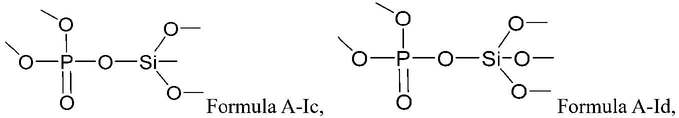

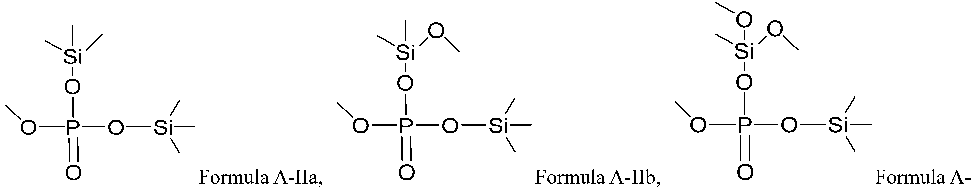

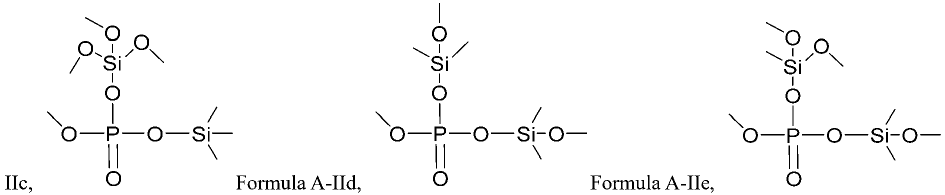

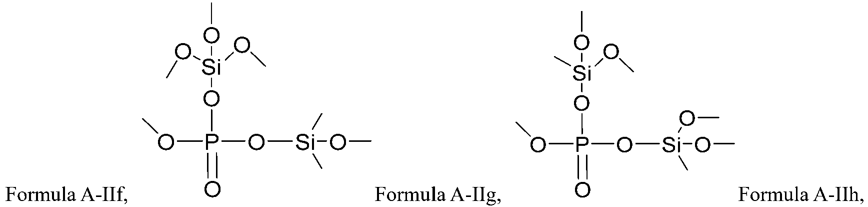

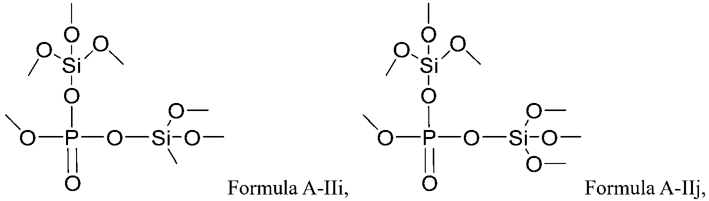

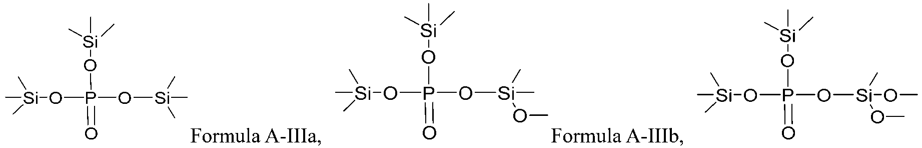

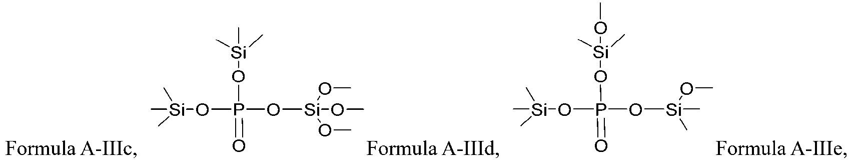

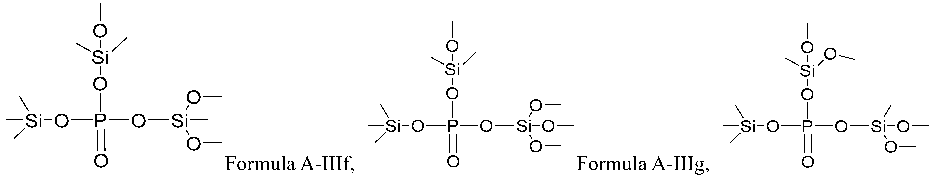

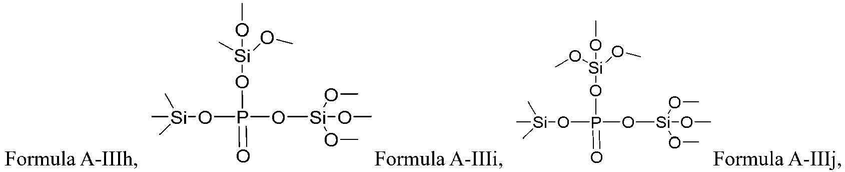

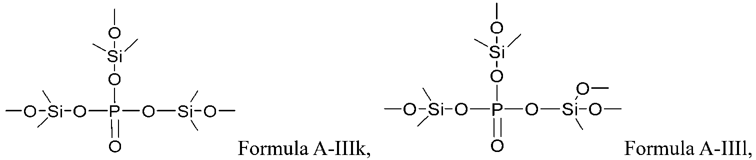

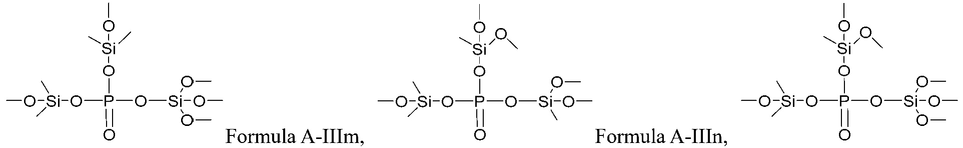

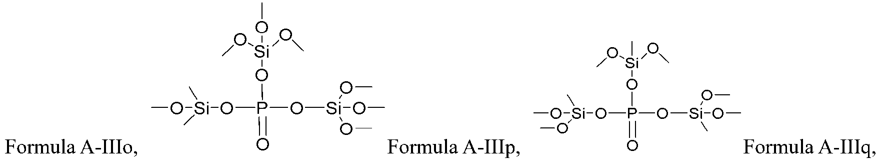

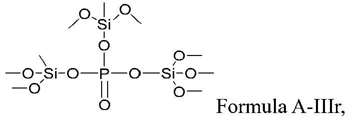

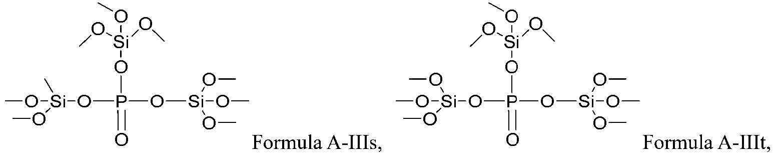

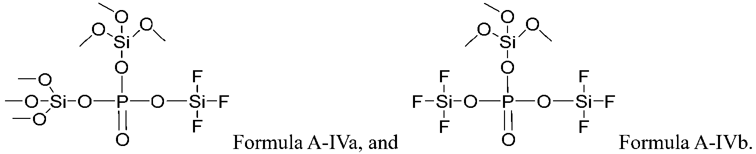

In some embodiments, the phosphate compound includes a compound represented by Formula B, 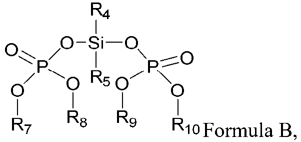 in Formula B,
R₄ and R₅ each independently include a phosphite group, a substituted or unsubstituted alkyl group, a substituted or unsubstituted alkoxy group, a substituted or unsubstituted aryl group, a substituted or unsubstituted aryloxy group, or a substituted or unsubstituted phosphoryl group;
R₇ to R₁₀ each independently comprise a substituted or unsubstituted alkyl group, a substituted or unsubstituted alkoxy group, a substituted or unsubstituted aryl group, a substituted or unsubstituted aryloxy group, or a substituted or unsubstituted phosphoryl group.

In some embodiments, the compound represented by Formula B includes at least one of a compound represented by Formula B-1 to a compound represented by Formula B-6,

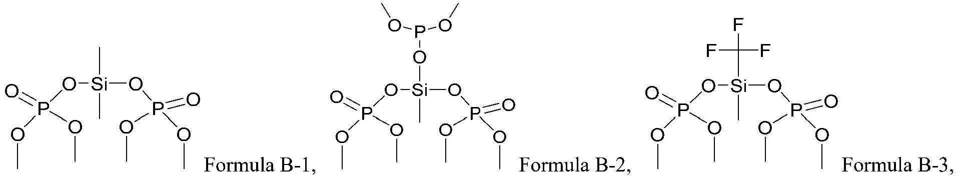

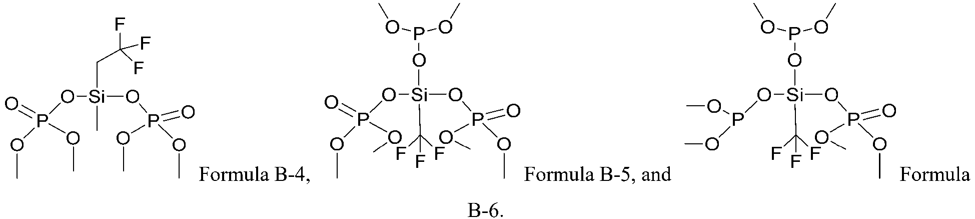

Therefore, the phosphate compound of the embodiment of the present application includes at least two phosphate groups, and the at least two phosphate groups are connected by a silicon-containing group. As the content of phosphate groups increases, the flame retardant property of the electrolyte solution increases.

In some embodiments, the phosphate compound includes a compound represented by Formula C, 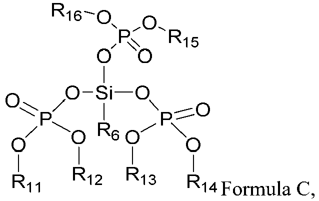
in Formula C, R₆ comprises a phosphite group, a substituted or unsubstituted alkyl group, a substituted or unsubstituted alkoxy group, a substituted or unsubstituted aryl group, a substituted or unsubstituted aryloxy group, or a substituted or unsubstituted phosphoryl group;
R₁₁ to R₁₆ each independently comprise a substituted or unsubstituted alkyl group, a substituted or unsubstituted alkoxy group, a substituted or unsubstituted aryl group, a substituted or unsubstituted aryloxy group, or a substituted or unsubstituted phosphoryl group.

Therefore, the phosphate compound of the embodiment of the present application includes at least two phosphate groups, and the at least two phosphate groups are connected by a silicon-containing group. As the content of phosphate groups increases, the flame retardant property of the electrolyte solution increases.

In some embodiments, the compound represented by Formula C includes at least one of a compound represented by Formula C-1 to a compound represented by Formula C-3,

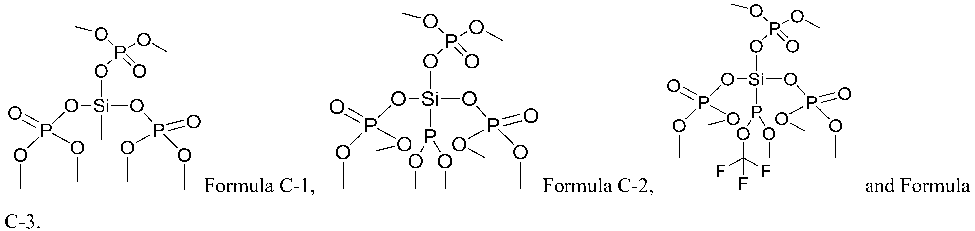

In some embodiments, based on the total volume of the electrolyte solution, the phosphate compound has a volume content of ≥ 9%; optionally, the volume content of the phosphate compound is 20% to 60%. When the volume content of the phosphate compound is within the above range, the flame retardant property of the system can be improved. The silicon-containing groups and the phosphate groups work together to toughen the SEI film, thereby improving the cycling performance and reliability of the lithium metal battery.

In some embodiments, the organic solvent further includes a nitrogen-containing ionic liquid, which can improve the flame retardancy of the electrolyte solution.

In some embodiments, the nitrogen-containing ionic liquid includes cations and anions, the cation includes at least one of an amine cation, an imidazolium cation, a piperidinium cation, and a pyridinium cation, and the anion includes at least one of a trifluoromethylsulfonylimide anion, a bis(fluorosulfonyl)imide anion, and a difluoro(oxalato)borate anion.

In some embodiments, based on the total volume of the electrolyte solution, the ratio of the volume content of the phosphate compound to the volume content of the nitrogen-containing ionic liquid is 1 : (0.1 to 9); optionally 1 : (1 to 3). The ratio of the volume content of the phosphate compound to the nitrogen-containing ionic liquid is within the above range, which can further enhance the flame retardant property of the system, improve the toughness of the SEI film, and enhance the cycling performance and reliability of the lithium metal battery.

In some embodiments, the electrolyte solution further includes a lithium salt, the lithium salt including at least one of lithium bis(trifluoromethylsulfonyl)imide, lithium bis(fluorosulfonyl)imide and lithium difluoro(oxalato)borate; the molar concentration of the lithium salt is 0.1 mol/L to 4 mol/L; optionally 1.8 mol/L to 2.2 mol/L. The use of lithium salts in combination with the above-mentioned organic solvents can also form an SEI film containing inorganic components such as lithium fluoride on the negative electrode plate, which can further improve the structural stability of the SEI film and thus improve the cycling performance of the lithium metal battery.

In a second aspect, an embodiment of the present application further provides a lithium metal battery, including an electrolyte solution for a lithium metal battery as in any embodiment of the first aspect of the present application.

In some embodiments, the lithium metal battery further includes a positive electrode plate. The positive electrode plate includes a positive electrode current collector and a positive electrode film layer disposed on at least one side of the positive electrode current collector, and the positive electrode film layer includes a positive electrode active material including a compound of a composition formula of LiₐNi_{b}Co_{c}M_{d}O_{c}A_{f} and a modified compound thereof, where 0.8 ≤ a ≤ 1.2, 0.5 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti and B, and A includes at least one of N, F, S and Cl.

In some embodiments, the battery further includes a negative electrode plate. The negative electrode plate includes a negative electrode current collector.

In some embodiments, the negative electrode plate includes a negative electrode current collector and a negative electrode film layer disposed on at least one side of the negative electrode current collector. The negative electrode film layer includes a lithium metal or a lithium metal alloy, and the lithium metal alloy includes a lithium metal and a non-lithium elementary substance, where the non-lithium elementary substance includes at least one of tin, zinc, aluminum, magnesium, silver, gold, gallium, indium, foil, boron, carbon and silicon.

In a third aspect, an embodiment of the present application further provides an electrical device, including a lithium metal battery as in any embodiment of the second aspect of the present application.

### BRIEF DESCRIPTION OF THE DRAWINGS

In order to provide a clearer explanation of the technical solutions of the embodiments of the present application, a brief introduction will be given to the accompanying drawings required in the embodiments of the present application. It is evident that the accompanying drawings described below are only some embodiments of the present application. For those of ordinary skill in the art, other accompanying drawings can be obtained based on these drawings without any creative effort.
FIG. 1 is a schematic diagram of an embodiment of a lithium metal battery according to the present application.
FIG. 2 is a schematic exploded view of an embodiment of a lithium metal battery shown in FIG. 1.
FIG. 3 is a schematic diagram of an embodiment of a battery module according to the present application.
FIG. 4 is a schematic diagram of an embodiment of a battery pack according to the present application.
FIG. 5 is a schematic exploded view of an embodiment of a battery pack shown in FIG. 4.
FIG. 6 is a schematic diagram of an embodiment of an electrical device including a lithium metal battery of the present application as a power source.

The accompanying drawings are not necessarily drawn to the actual scale.

Description of reference numerals:
1: Battery pack; 2: Upper box; 3: Lower box; 4: Battery module;
5. Lithium metal battery; 51. Case; 52. Electrode assembly;
53. Cover plate;
6. Electrical device.

### DETAILED DESCRIPTION

Hereinafter, embodiments of the electrolyte solution for a lithium metal battery, a lithium metal battery, and electrical device in the present application will be described in detail with reference to the accompanying drawings as appropriate. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present application, unless stated otherwise, the numerical range "a-b" represents an abbreviated representation of any combination of real numbers between a to b, where both a and b are real numbers. For example, the numerical range "0-5" means that all real numbers between 0 and 5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

A lithium metal battery includes an electrode assembly and an electrolyte solution. The electrode assembly includes a positive electrode plate, a negative electrode plate and a separator. The separator is located between the positive electrode plate and the negative electrode plate to isolate the positive electrode plate from the negative electrode plate.

Lithium metal batteries achieve energy storage and discharge by the stripping and deposition of the lithium metal. Specifically, during the charging process of the lithium metal batteries, lithium ions are stripped from the positive active material of the positive electrode plate, passing through the separator through the electrolyte solution, and through the solid electrolyte interface (referred to as SEI) film, then deposited and reduced to lithium metal on the surface of the negative electrode plate, thus generating a current concentration difference in the external circuit. During the discharge process of the lithium metal batteries, the lithium metal on the surface of the negative electrode plate loses electrons to the external circuit, and form lithium ions releasing into the electrolyte solution and migrating through the electrolyte solution to the positive electrode in the active material.

During the charge and discharge cycle of lithium metal batteries, the volume of lithium metal changes. For example, during the charging process, the volume of lithium metal expands. The expanded lithium metal may cause the SEI film to be damaged. Lithium ions pass through the damaged area of the SEI film and deposit irregularly on the negative electrode surface, causing the growth of lithium dendrites. The lithium dendrites may pierce the separator and contact the positive electrode plate, causing a short circuit, triggering thermal runaway, and deteriorating the reliability of the lithium metal batteries.

In order to improve the reliability of the lithium metal batteries, in the relevant technology, adding a flame retardant, such as a phosphate compounds to the electrolyte solution is considered. The phosphate compound has the advantages of a low viscosity, a low melting point, low costs and high flame retardancy, and are widely used in an electrolyte solution in the flame retardant system. However, the phosphate compound is difficult to form a stable SEI film on the surface of the negative electrode plate, and cannot effectively alleviate the growth of lithium dendrites. Moreover, lithium metal is prone to side reactions with the electrolyte solution, causing the lithium metal and the electrolyte solution to be consumed. Further, the phosphate compound has poor reduction resistance and easily decomposes at the negative electrode plate, which is not conducive to improving the low-temperature and high-temperature cycling performance of the lithium metal batteries.

In view of the above problems, in the embodiments of the present application the composition of the electrolyte solution is further improved, thereby improving the performance of the SEI film and the flame retardant property of the electrolyte solution by selecting specific organic solvents. Specifically, the organic solvent includes a phosphate compound, which has good flame retardant property and can improve the flame retardant effect of the electrolyte solution and the reliability of the lithium metal battery. The phosphate compound includes a silicon-containing group and at least one phosphate group, and the oxygen atom of at least one phosphorus-oxygen single bond in the phosphate group is connected to the silicon atom of the silicon-containing group by a covalent single bond to form a silicon-oxygen bond. The silicon-oxygen bond can undergo a polymerization reaction on the surface of the negative electrode to form a tough SEI film. The SEI film is not easy to break and can reduce the formation of lithium dendrites. Moreover, the SEI film can provide good protection for the negative electrode plate, reduce the risk of side reactions between the lithium metal and the electrolyte solution, thereby improving the low-temperature and high-temperature cycling performance of the lithium metal battery.

Next, the technical solution of the present application is described in detail.

### Electrolyte solution for lithium metal battery

In a first aspect, an embodiment of the present application provides an electrolyte solution for a lithium metal battery.

The electrolyte solution for a lithium metal battery includes an organic solvent, the organic solvent includes a phosphate compound including a silicon-containing group and at least one phosphate group, where an oxygen atom of at least one phosphorus-oxygen single bond in the phosphate group is connected to the silicon atom of the silicon-containing group by a covalent single bond.

The skeleton structure of the phosphate compound is a phosphate group. The hydrogen atoms on the phosphate group can be replaced by other groups, such as silicon-containing groups. The phosphate group can improve the flame retardant property of the system. The silicon-containing groups and the phosphate groups work together to toughen the SEI film, thereby improving the cycling performance and reliability of the lithium metal battery.

Although the mechanism is not clear, the mechanism of action of the present application is speculated to be as follows:

The phosphate group can capture combustion free radicals such as hydrogen free radicals, hydroxyl free radicals, etc., thereby blocking the chain reaction of free radicals, such that the combustion process cannot be performed due to the lack of combustion free radicals, reducing the risk of continuous combustion of the electrolyte solution, achieving flame retardance or non-flammability of the electrolyte solution, and improving the thermal stability of the electrolyte solution, thereby improving the reliability of the use of lithium metal batteries.

The oxygen atom in the phosphorus-oxygen single bond and the silicon atom in the silicon-containing group can be connected by a form of a covalent single bond to form a silicon-oxygen bond Si-O. The silicon-oxygen bond can participate in the formation of the SEI film, undergo a polymerization reaction to form an organic polymer, and increase the toughness of the SEI film. During the charging and discharging process of a lithium metal, the volume of lithium metal changes with a force applied to the SEI film, the SEI film is not easily broken due to the excellent toughness, which allows the lithium metal to be deposited uniformly and does not easily results in lithium dendrites. Moreover, the above-mentioned organic polymer in the SEI film is highly resistant to reduction and does not easily decompose. As a result, the SEI film can have a good protective function with respect to the negative electrode plate, reduce the risk of side reactions between the lithium metal and electrolyte solution, and thus improve the low-temperature and high-temperature cycling performance of lithium metal batteries.

In some embodiments, the silicon-containing group may include a silicon-oxygen bond Si-O, and the phosphate compound includes multiple silicon-oxygen bonds, which can further improve the toughness of the SEI film and further improve the low-temperature and high-temperature cycling performance of the lithium metal battery, and which can also further improve the solubility of lithium salts and improve the kinetic performance of the battery.

In some embodiments, the phosphate compound further includes an ether bond, specifically, the silicon-containing group may include an ether bond; and/or the phosphate group may include an ether bond. Ether bonds can participate in the film-forming reaction of the SEI film, further improving the stability of the SEI film, thereby improving the low-temperature and high-temperature cycling performance of lithium metal batteries.

The phosphate compound may include at least one phosphate group, such as one, two, three or four phosphate groups. The specific structure of the phosphate compound is described below.

In some embodiments, the phosphate compound includes a compound represented by Formula A, 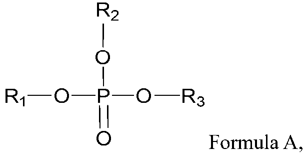 in Formula A,
R₁ to R₃ each independently include a substituted or unsubstituted alkyl group, a substituted or unsubstituted alkoxy group, a substituted or unsubstituted aryl group, a substituted or unsubstituted aryloxy group, a substituted or unsubstituted phosphoryl group, a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group;
where at least one of R₁ to R₃ includes a silicon-containing groups, and the specific silicon-containing group may include a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group.

In some embodiments, R₁ to R₃ each independently include a substituted or unsubstituted C1 to C6 alkyl group, a substituted or unsubstituted C1 to C6 alkoxy group, a substituted or unsubstituted C1 to C6 aryl group, a substituted or unsubstituted C1 to C6 aryloxy group, a substituted or unsubstituted C1 to C6 phosphoryl group, a substituted or unsubstituted C1 to C6 silane, a substituted or unsubstituted C1 to C6 siloxy group, a substituted or unsubstituted C1 to C6 alkylsilyl group, a substituted or unsubstituted C1 to C6 alkoxysilyl group, or a substituted or unsubstituted C1 to C6 alkoxyalkylsilyl group.

Where the above groups are substituted, the substituent group includes at least one of a halogen atom, a sulfur atom, and a mercapto group; optionally a halogen atom. The halogen atom such as a fluorine atom can reduce the hydrogen content in the system and further reduce the flammability of the electrolyte solution. Moreover, since the fluorine atom has a strong electron-withdrawing effect, thus facilitating the formation of an excellent SEI film at the interface of the negative electrode plate, which can improve the compatibility between the electrolyte solution and the negative electrode plate, thereby further improving the cycling performance of the lithium metal batteries.

In some embodiments, one of R₁ to R₃ includes a silicon-containing group. During the process of the formation of SEI film with silicon-containing groups participating, the steric hindrance is small, which is conducive to the formation of SEI film.

Exemplarily, the compound represented by Formula A includes at least one of a compound represented by Formula A-Ia to a compound represented by Formula A-Id,

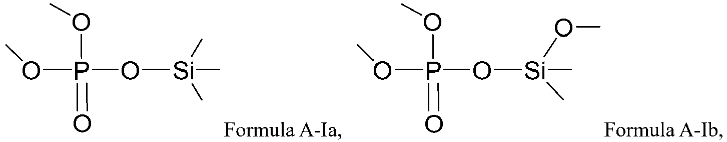

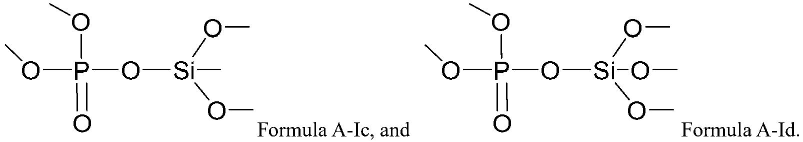

In some embodiments, at least two of R₁ to R₃ include a silicon-containing group, and the specific silicon-containing group may include a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group. The more the silicon-containing groups in the phosphate compounds, the tougher the SEI film they form, and the more beneficial it will be to improve the structural stability of the SEI film and the protective performance of the negative electrode plate, thereby improving the cycling performance of the lithium metal batteries.

In some embodiments, two of R₁ to R₃ include a silicon-containing group. As the silicon content increases, the number of silicon-oxygen bonds increases, the film-forming performance of the SEI film is better, which facilitates the improvement of the coulombic efficiency of the battery.

Exemplarily, the compound represented by Formula A includes at least one of a compound represented by Formula A-IIa to a compound represented by Formula A-IIj,

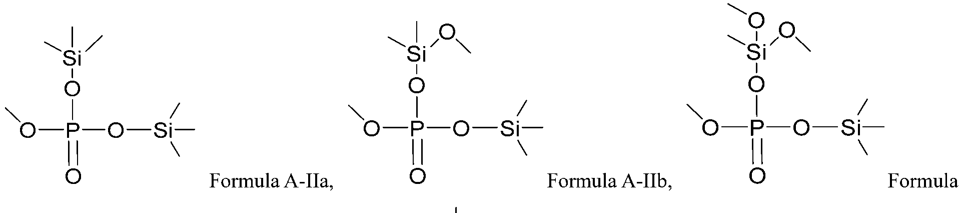

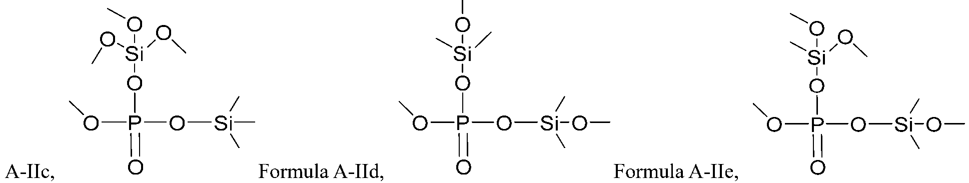

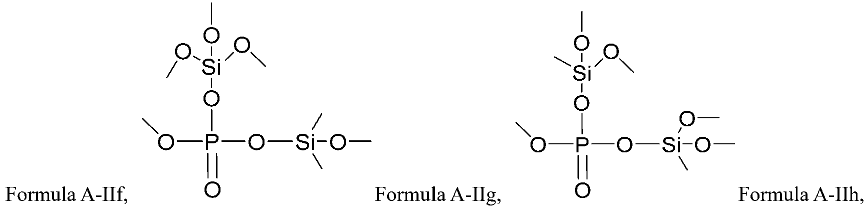

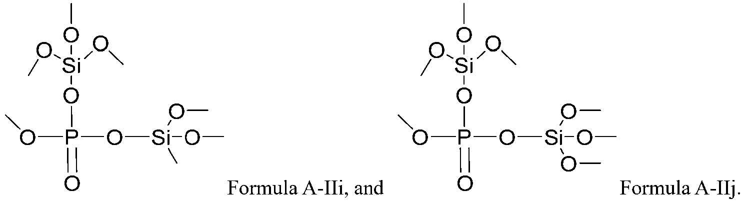

In some embodiments, R₁ to R₃ all includes a silicon-containing group.

Exemplarily, the compound represented by Formula A includes at least one of a compound represented by Formula A-IIIa to a compound represented by Formula A-IIIt,

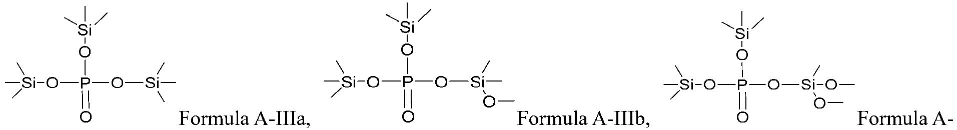

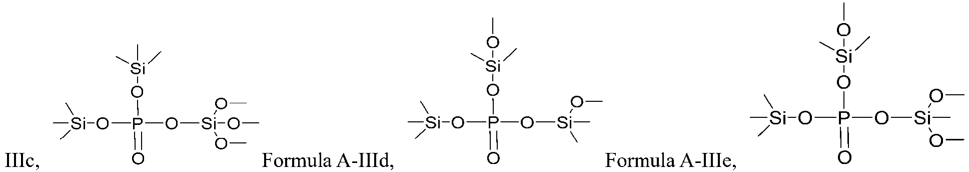

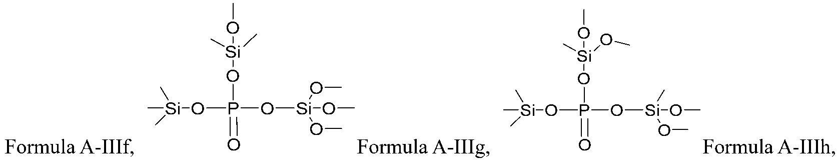

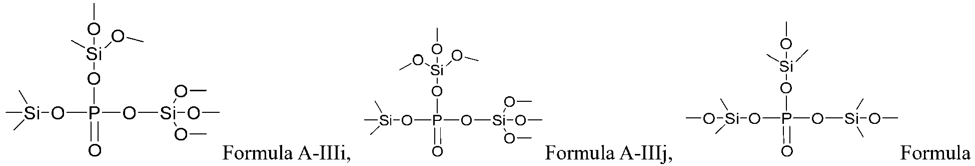

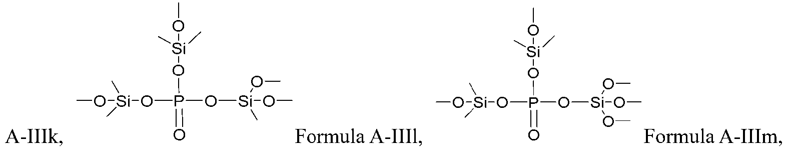

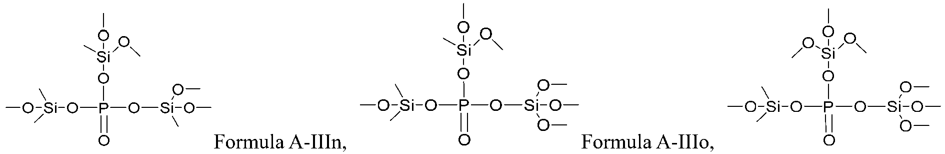

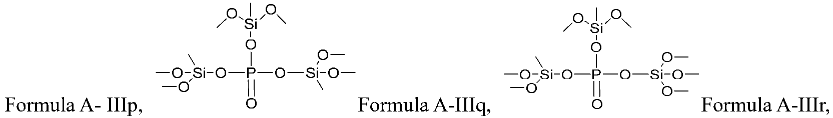

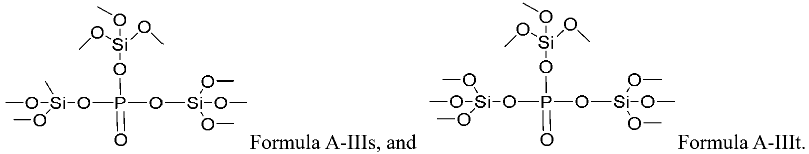

In some embodiments, the phosphate compound includes a fluorine atom.

Exemplarily, the compound represented by Formula A includes at least one of a compound represented by Formula A-IVa and a compound represented by Formula A-IVb,

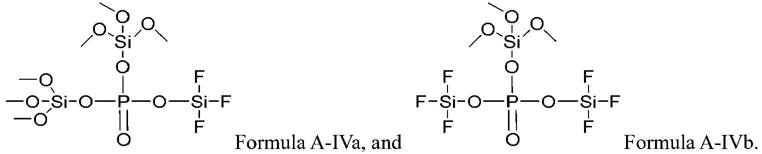

In some embodiments, the phosphate compound includes at least two phosphate groups, and the at least two phosphate groups are connected by a silicon-containing group. As the content of phosphate groups increases, the flame retardant property of the electrolyte solution increases.

In some embodiments, the phosphate compound includes a compound represented by Formula B, 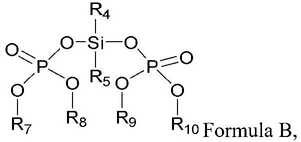 in Formula B,
R₄ and R₅ each independently include a phosphite group, a substituted or unsubstituted alkyl group, a substituted or unsubstituted alkoxy group, a substituted or unsubstituted aryl group, a substituted or unsubstituted aryloxy group, or a substituted or unsubstituted phosphoryl group;
R₇ to R₁₀ each independently comprise a substituted or unsubstituted alkyl group, a substituted or unsubstituted alkoxy group, a substituted or unsubstituted aryl group, a substituted or unsubstituted aryloxy group, or a substituted or unsubstituted phosphoryl group.

The phosphite group includes a phosphorus atom, which can further improve the flame retardant effect.

In some embodiments, R₄ and R₅ each independently include a phosphite group, a substituted or unsubstituted C1 to C6 alkyl group, a substituted or unsubstituted C1 to C6 alkoxy group, a substituted or unsubstituted C1 to C6 aryl group, a substituted or unsubstituted C1 to C6 aryloxy group, or a substituted or unsubstituted phosphoryl group.

In some embodiments, R₇ to R₁₀ each independently include a substituted or unsubstituted C1 to C6 alkyl group, a substituted or unsubstituted C1 to C6 alkoxy group, a substituted or unsubstituted C1 to C6 aryl group, a substituted or unsubstituted C1 to C6 aryloxy group, or a substituted or unsubstituted phosphoryl group.

Where the above groups are substituted, the substituent group includes at least one of a halogen atom, a sulfur atom, and a mercapto group; optionally a halogen atom. The halogen atom such as a fluorine atom can reduce the hydrogen content in the system and further reduce the flammability of the electrolyte solution. Moreover, since the fluorine atom has a strong electron-withdrawing effect, thus facilitating the formation of an excellent SEI film at the interface of the negative electrode plate, which can improve the compatibility between the electrolyte solution and the negative electrode plate, thereby further improving the cycling performance of the lithium metal batteries.

In some embodiments, the compound represented by Formula B includes at least one of a compound represented by Formula B-1 to a compound represented by Formula B-6, 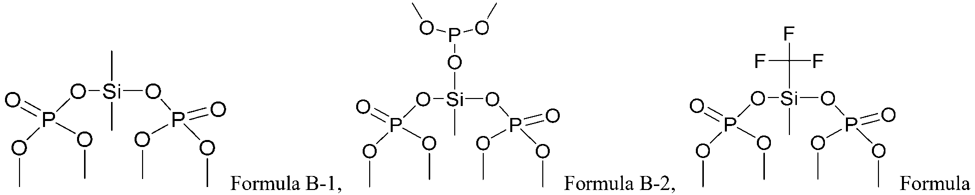 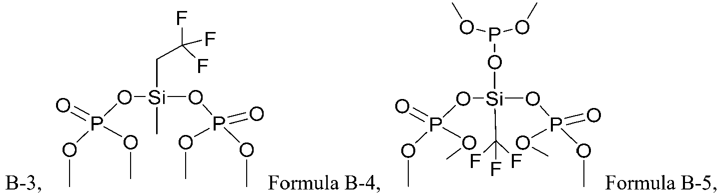 and

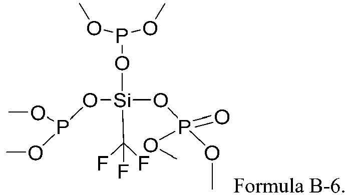

In some embodiments, the phosphate compound includes three phosphate groups, and the three phosphate groups are connected by a silicon-containing group. As the content of phosphate groups increases, the flame retardant property of the electrolyte solution increases.

In some embodiments, the phosphate compound includes a compound represented by Formula C, 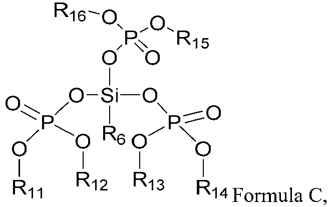
in Formula C, R₆ comprises a phosphite group, a substituted or unsubstituted alkyl group, a substituted or unsubstituted alkoxy group, a substituted or unsubstituted aryl group, a substituted or unsubstituted aryloxy group, or a substituted or unsubstituted phosphoryl group;
R₁₁ to R₁₆ each independently comprise a substituted or unsubstituted alkyl group, a substituted or unsubstituted alkoxy group, a substituted or unsubstituted aryl group, a substituted or unsubstituted aryloxy group, or a substituted or unsubstituted phosphoryl group.

The phosphite group includes a phosphorus atom, which can further improve the flame retardant effect.

In some embodiments, R₆ includes a phosphite group, a substituted or unsubstituted C1 to C6 alkyl group, a substituted or unsubstituted C1 to C6 alkoxy group, a substituted or unsubstituted C1 to C6 aryl group, a substituted or unsubstituted C1 to C6 aryloxy group, or a substituted or unsubstituted phosphoryl group.

In some embodiments, R₁₁ to R₁₆ each independently include a substituted or unsubstituted C1 to C6 alkyl group, a substituted or unsubstituted C1 to C6 alkoxy group, a substituted or unsubstituted C1 to C6 aryl group, a substituted or unsubstituted C1 to C6 aryloxy group, or a substituted or unsubstituted phosphoryl group.

Where the above groups are substituted, the substituent group includes at least one of a halogen atom, a sulfur atom, and a mercapto group; optionally a halogen atom. The halogen atom such as a fluorine atom can reduce the hydrogen content in the system and further reduce the flammability of the electrolyte solution. Moreover, since the fluorine atom has a strong electron-withdrawing effect, thus facilitating the formation of an excellent SEI film at the interface of the negative electrode plate, which can improve the compatibility between the electrolyte solution and the negative electrode plate, thereby further improving the cycling performance of the lithium metal batteries.

In some embodiments, the compound represented by Formula C includes at least one of a compound represented by Formula C-1 to a compound represented by Formula C-3,

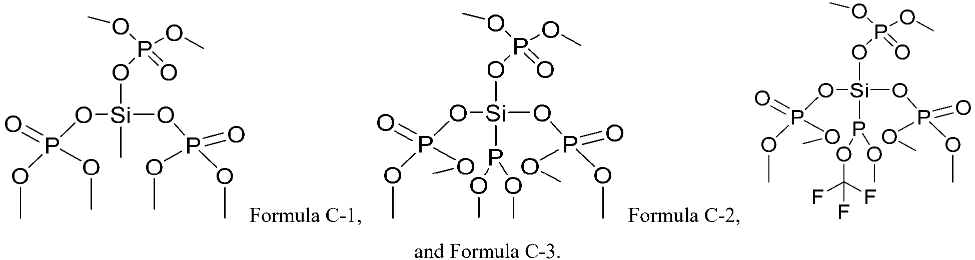

The above phosphate compounds can be obtained commercially or synthesized according to conventional methods. The preparation for the compound represented by Formula A-IIIa is used as an example for illustration.

Hexamethyldisiloxane and phosphoric acid are added to a reaction kettle, and subjected to a dehydration reaction under the conditions of heating, stirring and reflux condensation. The conditions for the dehydration reaction are: a temperature of 100°C, a time of 5 hours, and a pressure of 1.0 MPa. Then 1-trimethylsilylpyrrolidine is added for a distillation reaction, and the resulting amine is evaporated during the reaction. The reaction liquid is finely filtered and vacuum distilled to obtain a compound represented by Formula A-IIIa. The distillation conditions are: a temperature of 200°C, a time of 10 hours, and a pressure of 1.0 MPa. The molar ratio of hexamethyldisiloxane, phosphoric acid to 1-trimethylsilylpyrrolidine is 3 : 1 : 3.

In some embodiments, based on the total volume of the electrolyte solution, the volume content of the phosphate compound is < 100%, and the volume content of the phosphate compound is ≥ 9%; optionally, the volume content of the phosphate compound is 20% to 60%. When the volume content of the phosphate compound is within the above range, the flame retardant property of the system can be improved. The silicon-containing groups and the phosphate groups work together to toughen the SEI film, thereby improving the cycling performance and reliability of the lithium metal battery.

Exemplarily, based on the total volume of the electrolyte solution, the volume content of the phosphate compound can be 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 45%, 50%, 55%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90% or a range formed by any two of these values.

In some embodiments, the electrolyte solution further includes a nitrogen-containing ionic liquid. The nitrogen-containing ionic liquid can improve the flame retardancy of the electrolyte solution.

In some embodiments, the nitrogen-containing ionic liquid includes cations and anions, the cation includes at least one of an amine cation, an imidazolium cation, a piperidinium cation, and a pyridinium cation, and the anion includes at least one of a trifluoromethylsulfonylimide anion, a bis(fluorosulfonyl)imide anion, and a difluoro(oxalato)borate anion. Optionally, the anion includes at least one of difluoro(oxalato)borate anions. The nitrogen-containing ionic liquid can provide a large amount of anions to form an anion-derived SEI film, further improving the performance of the SEI film, thereby further improving the cycling performance.

In some embodiments, based on the total volume of the electrolyte solution, the volume content of the nitrogen-containing ionic liquid is ≤ 91%; optionally, the volume content of the nitrogen-containing ionic liquid is 40% to 80%. When the volume content of the nitrogen-containing ionic liquid is within the above range, the flame retardancy of the electrolyte solution can be further improved.

Exemplarily, the volume content of the nitrogen-containing ionic liquid can be 40%, 45%, 50%, 55%, 60%, 61%, 62%, 63%, 64%, 65%, 66%, 67%, 68%, 69%, 70%, 71%, 72%, 73%, 74%, 75%, 76%, 77%, 78%, 79%, 80%, or a range formed by any two of these values.

In some embodiments, the ratio of the volume content of the phosphate compound to the volume content of the nitrogen-containing ionic liquid is 1 : (0.1 to 9); optionally 1 : (1 to 3). The ratio of the volume content of the phosphate compound to the nitrogen-containing ionic liquid is within the above range, which can further enhance the flame retardant property of the system, improve the toughness of the SEI film, and enhance the cycling performance and reliability of the lithium metal battery.

Exemplarily, the ratio of the volume content of the phosphate compound to the volume content of the nitrogen-containing ionic liquid can be 1 : 0.1, 1 : 0.5, 1 : 1, 1 : 1.01, 1 : 1.05, 1 : 1.1, 1 : 1.2, 1 : 1.5, 1 : 1.8, 1 : 2, 1 : 2.2, 1 : 2.5, 1 : 2.8, 1 : 3, 1 : 3.2, 1 : 3.5, 1 : 3.8, 1 : 4, 1 : 4.2, 1 : 4.5, 1: 4.8, 1 : 5, 1 : 5.2, 1 : 5.5, 1 : 5.8, 1 : 6, 1 : 6.2, 1 : 6.5, 1 : 6.8, 1 : 7, 1 : 7.2, 1 : 7.5, 1 : 7.8, 1 : 8, 1 : 8.2, 1 : 8.5, 1 : 8.8, 1 : 9 or a range formed by any two of these values.

In some embodiments, the electrolyte solution further includes a lithium salt, and the lithium salt includes at least one of lithium bis(trifluoromethylsulfonyl)imide, lithium bis(fluorosulfonyl)imide, and lithium difluoro(oxalato)borate. The use of lithium salts in combination with the above-mentioned organic solvents can also form an SEI film containing inorganic components such as lithium fluoride on the negative electrode plate, which can further improve the structural stability of the SEI film and thus improve the cycling performance of the lithium metal battery.

In some embodiments, the molar concentration of the lithium salt is 0.1 mol/L to 4 mol/L; optionally 1.8 mol/L to 2.2 mol/L. The above concentration of lithium salt is conducive to decomposition on the surface of the negative electrode plate to form lithium fluoride, increasing the content of lithium fluoride in the SEI film, further improving the structural stability of the SEI film, and thus further improving the cycling performance of the lithium metal battery. Moreover, the above organic solvents have excellent lithium salt solubility, which is beneficial to the dissociation of ions in lithium salts and the improvement of the migration rate of lithium ions.

Exemplarily, the molar concentration of the lithium salt can be 0.1 mol/L, 0.2 mol/L, 0.5 mol/L, 0.8 mol/L, 1 mol/L, 1.2 mol/L, 1.3 mol/L, 1.5 mol/L, 1.8 mol/L, 2 mol/L, 2.2 mol/L, 2.5 mol/L, 2.8 mol/L, 3 mol/L, 3.2 mol/L, 3.5 mol/L, 3.8 mol/L, 4 mol/L, or a range formed by any two of these values.

The qualitative and quantitative properties of each substance or element in the present application can be detected using appropriate equipment and methods known to those skilled in the art. The relevant detection methods can refer to Chinese and foreign detection standards, Chinese and foreign enterprise standards, etc., and those skilled in the art can also adapt certain detection steps/instrument parameters, etc., in view of the detection accuracy to obtain more accurate detection results. A single detection method can be used for qualitative or quantitative determination, or a combination of several detection methods can be used for qualitative or quantitative determination.

The types and contents of inorganic components/lithium salt concentrations in the electrolyte solution are well known in the art and can be detected using equipment and methods known in the art. For example, the inorganic components/lithium salt concentrations in the electrolyte solution can be qualitatively or quantitatively analyzed by ion chromatography analysis method according to standard JY/T020-1996 "General Rules for Ion Chromatography Analysis Methods". In the embodiments of the present application, a newly prepared electrolyte solution can be taken as a sample, or a battery that has been fully discharged (discharged to the lower limit cut-off voltage such that the battery's charged state is approximately 0% SOC) can be reversely disassembled, and the free electrolyte solution obtained from the battery can be used as a sample for detection using an ion chromatography analysis method.

The types and contents of organic components in the electrolyte solution are well known in the art and can be detected using equipment and methods known in the art. For example, reference can be made to GB/T9722-2006 "Chemical Reagents - General Rules for Gas Chromatography" to perform qualitative and quantitative analysis of organic components in the electrolyte solution by gas chromatography. In the embodiments of the present application, a newly prepared electrolyte solution can be taken as a sample, or a battery that has been fully discharged (discharged to the lower limit cut-off voltage such that the battery's charged state is approximately 0% SOC) can be reversely disassembled, and the free electrolyte solution obtained from the battery can be used as a sample for detection using an ion chromatography analysis method.

### Lithium Metal Battery

In a second aspect, an embodiment of the present application provides a lithium metal battery.

### [Negative electrode plate]

In some embodiments, the lithium metal battery includes a negative electrode plate.

The negative electrode plate is combined with the above-mentioned electrolyte solution, and the phosphate compound in the electrolyte solution can form an SEI film containing a silicon polymer on the surface of the negative electrode plate, thereby improving the toughness of the SEI film, reducing the risk of SEI film rupture, significantly increasing the uniformity of the lithium metal deposition, improving the interface performance of the negative electrode plate, and improving the cycling performance of the lithium metal battery.

In some embodiments, the negative electrode plate may include a negative electrode current collector. During the charging process of lithium metal batteries, lithium ions can be deposited on the surface of the negative electrode current collector to form a lithium metal layer; during the discharging process of lithium metal batteries, the lithium metal layer loses electrons to form lithium ions and migrates to the positive electrode active material.

The negative electrode current collector may be a metal foil or a composite current collector. As an example of the metal foil, a copper foil may be used. The composite current collector may include a polymer material base layer and a layer of a metal material formed on at least one surface of the polymer material base layer. For example, the metal material may include at least one of copper, a copper alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The negative electrode plate does not exclude additional functional layers. For example, in some embodiments, the negative electrode plate of the embodiment of the present application further includes a conductive layer (e.g., composed of a conductive agent and a binder) provided on the surface of the negative electrode current collector. In some other embodiments, the negative electrode plate of the embodiment of the present application further includes a protective layer covering the surface of the negative electrode current collector.

Optionally, the negative electrode plate may further include a conductive layer provided on at least one side of the negative electrode current collector, and the conductive layer includes a negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers.

Further optionally, the conductive layer may further include a negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS).

In other embodiments, the negative electrode plate may include a negative electrode current collector and a negative electrode film layer provided on at least one side of the negative electrode current collector. For example, the negative electrode current collector has two opposite surfaces in the thickness direction thereof, and the negative electrode film layer is provided on either or both of the two opposite surfaces of the negative electrode current collector. The negative electrode film layer may include a lithium metal or a lithium metal alloy, the lithium metal alloy includes a lithium metal and a non-lithium elementary substance, and the non-lithium elementary substance includes at least one of tin (Sn), zinc (Zn), aluminum (Al), magnesium (Mg), silver (Ag), gold (Au), gallium (Ga), indium (In), foil (Pt), boron (B), carbon (C) and silicon (Si).

The material of the negative electrode current collector is as described above and will not be repeated here.

The negative electrode plate does not exclude additional functional layers. For example, in some embodiments, the negative electrode plate of the embodiment of the present application further includes a conductive layer (e.g., composed of a conductive agent and a binder) provided on the surface of the negative electrode current collector. In some other embodiments, the negative electrode plate of the embodiment of the present application further includes a protective layer covering the surface of the negative electrode current collector.

Optionally, the negative electrode plate may further include a conductive layer, which is provided between the negative electrode current collector and the lithium metal layer. The conductive layer includes a negative electrode conductive agent. The material of the negative electrode conductive agent is as described above and will not be repeated here. Further optionally, the conductive layer may also include a negative electrode binder. The material of the negative electrode binder is as described above and will not be described in detail here.

### [Positive electrode plate]

In some embodiments, the lithium metal battery may further include a positive electrode plate.

The positive electrode plate includes a positive electrode current collector and a positive electrode film layer which is provided on at least one surface of the positive electrode current collector and includes a positive electrode active material. For example, the positive electrode current collector has two opposite surfaces in its own thickness direction, and the positive electrode film layer is provided on either or both of the two opposite surfaces of the positive electrode current collector.

The positive electrode active material may be a positive electrode active material used for a lithium metal battery and well known in the art. As an example, the positive electrode active material may include at least one of the following materials: a layered-structure positive electrode active material (e.g., ternary lithium/sodium nickelate, lithium/sodium cobaltate, lithium/sodium manganate and lithium/sodium-rich layered, and rock salt phase layered materials), an olivine-type phosphate active substance, and a spinel-structured positive electrode active material (e.g., spinel-type lithium manganate, spinel-type lithium nickel manganese oxide, lithium-rich spinel-type lithium manganate and lithium nickel manganese oxide, etc.).

Exemplarily, the layered positive electrode active material is a compound of a composition formula LiₐNi_{b}Co_{c}M_{d}O_{c}A_{f} and a modified compound thereof, where 0.8 ≤ a ≤ 1.2, 0.5 ≤ b < 1, 0 < c < 1, 0 < d < 1, 1 ≤ e ≤ 2, 0 ≤ f ≤ 1, M includes at least one of Ge, Mo, Sn, Mn, Al, Zr, Zn, Cu, Cr, Mg, Fe, V, Ti, and B, and A includes at least one of N, F, S and Cl.

Exemplarily, a can be 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1, 1.1, 1.2, or a range formed by any two of these values.

Exemplarily, b can be 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, or a range formed by any two of these values.

Exemplarily, c can be 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99 or a range formed by any two of these values.

Exemplarily, d can be 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99 or a range formed by any two of these values.

Exemplarily, e can be 1, 1.1, 1.2, 1.3, 1.4, 1.5, 1.6, 1.7, 1.8, 1.9, 2.0, or a range formed by any two of these values.

Exemplarily, f can be 0, 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1 or a range formed by any two of these values.

Optionally, 0 < a < 1; further optionally, 0.8 ≤ a < 1. a can be 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1 or a range formed by any two of these values.

Optionally, 0 < b < 1. b can be 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1 or a range formed by any two of these values.

Optionally, 0 < c < 1. c can be 0.01, 0.02, 0.05, 0.08, 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1 or a range formed by any two of these values.

Optionally, 0.1 ≤ a+b+c < 1. a+b+c can be 0.10, 0.12, 0.15, 0.18, 0.20, 0.22, 0.25, 0.28, 0.30, 0.32, 0.35, 0.38, 0.40, 0.42, 0.45, 0.48, 0.50, 0.52, 0.55, 0.58, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99 or a range formed by any two of these values.

z can be 1.8, 1.9, 2.0, 2.1, 2.2, 2.3, 2.4, 2.5, 2.6, 2.7, 2.8, 2.9, 3.0, 3.1, 3.2, 3.3, 3.4, 3.5 or a range formed by any two of these values.

Specifically, the layered structure positive electrode active material may include one or more of lithium cobalt oxide LCO, lithium nickel oxide LNO, lithium manganate LMO, LiNi_{1/3}Co_{1/3}Mn_{1/3}O₂(NCM333), LiNi_{0.8}Co_{0.1}Mn_{0.1}O₂(NCM811) and LiNi_{0.5}Co_{0.2}Mn_{0.3}O₂(NCM523), LiNi_{0.6}Co_{0.2}Mn_{0.2}O₂, LiNi_{0.85}Co_{0.15}Al_{0.05}O₂, LiNi_{0.80}Co_{0.15}Al_{0.05}O₂.

Exemplarily, the composition formula of the olivine-type phosphate active material is: LiₓA_{y}MeₐM_{b}P_{l-c}X_{c}Y_{z}, where 0 ≤ x ≤ 1.3, 0 ≤ y ≤ 1.3, and 0.9 ≤ x+y ≤ 1.3; 0.9 ≤ a ≤ 1.5, 0 ≤ b ≤ 0.5, and 0.9 ≤ a+b ≤ 1.5; 0 ≤ c ≤ 0.5; 3 ≤ z ≤ 5; A is selected from one or more of Na, K, and Mg; Me is selected from one or more of Mn, Fe, Co, and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; and Y is selected from one or more of O and F. Specifically, the olivine-type phosphate active material includes one or more of LiFePO₄, LiMnPO₄, LiNiPO₄, and LiCoPO₄.

Exemplarily, the composition formula of the positive electrode active material of a spinel structure is: LiₓA_{y}MnₐM₂₋ₐY_{z}, where 0 ≤ x ≤ 2, 0 ≤ y ≤ 1, and 0.9 ≤ x+y ≤ 2; 0.5 ≤ a ≤ 2; 3 ≤ z ≤ 5; A is selected from one or more of Na, K, and Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Specifically, the positive electrode active material of a spinel structure includes one or more of LiMn₂O₄, LiNi_{0.5}Mn_{1.5}O₄, LiCr_{0.3}Mn_{1.7}O₄, Li_{1.1}Al_{0.1}Mn_{1.9}O₄, Li₂Mn₂O₄and Li_{1.5}Mn₂O₄.

In an embodiment of the present application, each of the above-mentioned positive electrode active materials may also be a modified compound, and the modified compound may involve doping modification and/or surface coating modification of the positive electrode active material. For example, the material may be modified by doping with a transition metal element, or by coating the material surface with a carbon layer.

The charging and discharging process of a lithium metal battery is accompanied by the intercalation/deintercalation and consumption of active ions such as Li. The molar content of Li in the lithium metal battery is different when it is discharged to different states. In the list of the positive electrode active materials in the embodiments of the present application, the molar content of Li is the one at the initial state of the material, that is, the state before feeding. The positive electrode active material is used in a battery system, and the molar content of Li may change after the charge and discharge cycles.

In the list of the positive electrode active materials in the embodiments of the present application, the molar content of oxygen O is only a theoretical value. The release of oxygen from the lattice will cause a change in the molar content of oxygen O. In fact, the molar content of oxygen O may fluctuate.

In some embodiments, the positive electrode film layer further includes optionally a positive electrode conductive agent. The type of the positive electrode conductive agent is not particularly limited in the embodiments of the present application. As an example, the positive electrode conductive agent may include at least one of superconducting carbon, conductive graphite, acetylene black, carbon black, Ketjen black, carbon dots, carbon nanotubes, graphene, and carbon nanofibers. In some embodiments, based on the total weight of the positive electrode film layer, the mass content percentage of the binder is ≤ 5%.

In some embodiments, the positive electrode film layer may further optionally include a positive electrode binder. The type of the positive electrode binder is not particularly limited in the embodiments of the present application. As an example, the positive electrode binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin. In some embodiments, based on the total mass of the positive electrode film layer, the mass content percentage of the positive electrode binder is ≤ 5%.

In some embodiments, the positive electrode current collector may be a metal foil or a composite current collector. As an example of the metal foil, an aluminum foil may be used. The composite current collector may include a polymer material base layer and a layer of a metal material formed on at least one surface of the polymer material base layer. As an example, the metal material of the metal material layer may include at least one of aluminum, an aluminum alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The positive electrode film layer is usually formed by applying a positive electrode slurry onto the positive electrode current collector, followed by drying and cold pressing. The positive electrode slurry is usually formed by dispersing the positive electrode active material, an optional conductive agent, an optional binder, and any other components in a solvent and performing stirring uniformly. The solvent may be, but is not limited to, N-methyl pyrrolidone (NMP).

### [Separator]

In some embodiments, the lithium metal battery may further include a separator.

The type of the separator is not particularly limited in the embodiments of the present application, and any well-known separator with a porous structure having good chemical stability and mechanical stability may be selected.

In some embodiments, a material of the separator may include at least one of glass fiber, non-woven fabric, polyethylene, polypropylene, and polyvinylidene fluoride. The separator can be a single-layer film or a multilayer composite film without special limitations. When the separator is a multilayer composite film, materials of layers may be the same or different without special limitations.

In some embodiments, the positive electrode plate, the separator, and the negative electrode plate may be formed into an electrode assembly by a winding process and/or a laminating process.

In some embodiments, the lithium metal battery may include an outer package. The outer package can be used for packaging the aforementioned electrode assembly and the electrolyte solution.

In some embodiments, the outer package of the lithium metal battery may be a hard case, for example, a hard plastic case, an aluminum shell, or a steel shell. The outer package of the lithium metal battery may also be a soft package such as a pouch-type soft package. The material of the soft bag may be a plastic, such as at least one of polypropylene (PP), polybutylene terephthalate (PBT), and polybutylene succinate (PBS).

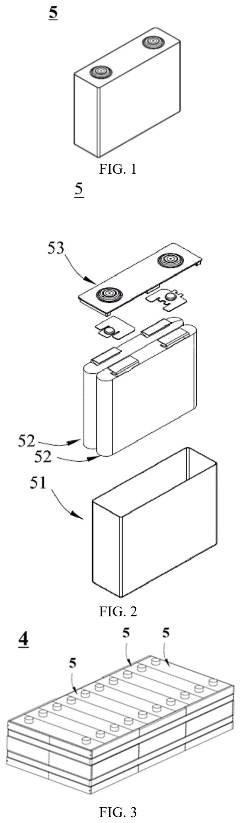

The shape of the lithium metal battery is not particularly limited in the embodiments of the present application, and the lithium metal battery may be cylindrical, prismatic, or of any other shape. FIG. 1 shows a prismatic lithium metal battery 5 as an example.

In some embodiments, as shown in FIG. 2, the outer package may include a case 51 and a cover plate 53. The case 51 may include a bottom plate and a side plate connected to the bottom plate. The bottom plate and the side plate enclose an accommodating cavity. The case 51 is provided with an opening in communication with the accommodating cavity, and the cover plate 53 is used for covering the opening to close the accommodating cavity. The positive electrode plate, the negative electrode plate, and the separator may be formed into an electrode assembly 52 by a winding process and/or a laminating process. The electrode assembly 52 is packaged in the accommodating cavity. An electrolyte solution infiltrates into the electrode assembly 52. The number of the electrode assemblies 52 included in the lithium metal battery 5 may be one or more, and can be adjusted according to requirements.

The preparation method for the lithium metal battery according to the embodiment of the present application is well known. In some embodiments, a positive electrode plate, a separator, a negative electrode plate, and an electrolyte solution may be assembled to form a lithium metal battery. As an example, the positive electrode plate, the separator, and the negative electrode plate may be formed into an electrode assembly by a winding process and/or a laminating process, the electrode assembly is placed in an outer package and dried, an electrolyte solution is injected, and the electrode assembly is subjected to procedures such as vacuum packaging, standing, forming, and shaping to obtain a lithium metal battery.

In some embodiments of the present application, the lithium metal batteries according to the present application can be assembled into a battery module. The number of lithium metal batteries contained in the battery module can be multiple, and the specific number can be adjusted according to the application and capacity of the battery module.

FIG. 3 is a schematic diagram of a battery module 4 as an example. As shown in FIG. 3, in the battery module 4, a plurality of lithium metal batteries 5 may be arranged in sequence along the length direction of the battery module 4. Certainly, the multiple battery cells can be arranged in any other way. The plurality of lithium metal batteries 5 may further be secured by fasteners.

Optionally, the battery module 4 may further include a shell having an accommodating space, and the plurality of lithium metal batteries 5 are accommodated in the accommodating space.

In some embodiments of the present application, the above battery modules may further form a battery pack, and the number of battery modules included in the battery pack may be adjusted based on application and the capacity of the battery pack.

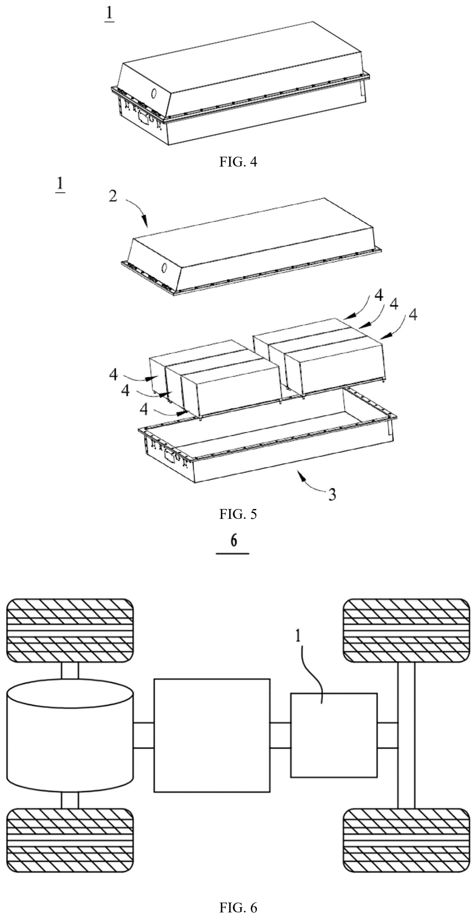

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box 2 and a lower box 3. The upper box 2 can cover the lower box 3 to form a closed space for accommodating the battery modules 4. The multiple battery modules 4 may be arranged in the battery box in any manner.

### Electrical device

A third aspect of the embodiments of the present application provides an electrical device, including at least one of the lithium metal battery, battery module or battery pack of the embodiments of the present application. The lithium metal battery, the battery module, or the battery pack can be used as a power source for an electrical device, or as an energy storage unit for an electrical device. The electrical device may be, but is not limited to, a mobile device (for example, a mobile phone, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

For the electrical device, the lithium metal battery, the battery module, or the battery pack can be selected according to the requirements during use.

FIG. 6 is a schematic diagram of an electrical device 6 as an example. The electrical device 6 is an all-electric vehicle, a hybrid electric vehicle, or a plug-in hybrid electric vehicle, etc. To meet the requirements of the electrical device 6 for a high power and a high energy density, a battery pack or a battery module may be used.

For another example, the electrical device may be a mobile phone, a tablet computer, a notebook computer, or the like. The electrical device usually needs to be light and thin, and a lithium metal battery may be used as a power source.

### Embodiments

The content disclosed in the present application is described in detail in the following embodiments. These embodiments are only for illustrative purposes because various modifications and changes made without departing from the scope of the content disclosed in the present application are apparent to persons skilled in the art. Unless otherwise stated, all parts, percentages, and ratios of the following examples are based on weight, all reagents used in the embodiments are commercially available or synthesized according to conventional methods and can be directly used without further treatment, and all instruments used in the examples are commercially available.

### Embodiment 1

### 1. Preparation of positive electrode plate

The positive electrode plate included a positive electrode current collector and a positive electrode film layer. The positive electrode current collector was an aluminum foil with a thickness of 10 µm. The positive electrode film layer included a film layer formed by uniformly coating a positive electrode slurry (the solvent is N-methylpyrrolidone NMP) onto the surface of the positive electrode current collector aluminum foil, followed by drying, and cold pressing. The positive electrode film layer included a positive electrode active material, a conductive agent of acetylene black, and a binder of polyvinylidene fluoride (PVDF) in a weight ratio of 98 : 1 : 1.

The positive electrode active material included a compound of a composition formula of LiNi_{0.8}Co_{0.1}Mn_{0.1}O₂(NCM811).

### 2. Preparation of negative electrode plate

The negative electrode plate included a negative electrode current collector and a lithium metal foil. The negative electrode current collector was a copper foil with a thickness of 13 µm. A lithium metal foil with a thickness of 50 µm was pressed on both sides of the copper foil by rolling.

### 3. Separator

The separator is a polyethylene (PE) film.

### 4. Preparation of electrolyte solution

The electrolyte solution includes an organic solvent and a lithium salt.

### 5. Preparation of lithium metal battery

The positive electrode plate, the separator, and the lithium metal negative electrode were laminated sequentially, so that the separator was disposed between the positive electrode plate and the lithium metal negative electrode for isolation to obtain an electrode assembly. The electrode assembly was placed into an outer packaging shell, and dried, and then the electrolyte solution was injected. After processes such as vacuum packaging, leaving to stand, formation, and shaping were performed, the laminated lithium metal battery was obtained.

### Embodiment 2 to Embodiment 9

A lithium metal battery was prepared by a method similar to that of Embodiment 1. The difference from Embodiment 1 was that the electrolyte solution components of Embodiments 2 to 9 are different from those of Embodiment 1, and in Embodiments 2 to 9 the volume ratio of the phosphate compound to the nitrogen-containing ionic liquid was particularly adjusted.

### Comparative Examples 1 to 3

A lithium metal battery was prepared by a method similar to that of Embodiment 1. The difference from Embodiment 1 was that the electrolyte solution components of Comparative Examples 1 to 3 are different from those of Embodiment 1.

### Performance test

### 1. Room temperature cycling test of lithium metal battery

The ambient temperature for normal temperature cycling of a lithium metal battery was set at 25°C, and the charge and discharge cycling was performed at a rate of 0.5C (i.e. 70 mA). The cut-off voltages for charge and discharge were set to 4.3 V and 2.8 V, respectively.

When the discharge capacity decays to 80% of the first-cycle discharge capacity, the battery is considered to have reached its end of life.

### 2. High cycling test of lithium metal battery

The ambient temperature for high-temperature cycling of lithium metal batteries was set at 60°C, and the charge and discharge cycling was performed at a rate of 0.5C (i.e., 70 mA). The cut-off voltages for charge and discharge were set to 4.3 V and 2.8 V, respectively.

When the discharge capacity decays to 80% of the first-cycle discharge capacity, the battery is considered to have reached its end of life.

### Test results

The test results are shown in Table 1.

**Table 1**

| Serial number | Electrolyte solution | | | | | Number of cycles of lithium metal battery | |
|---|---|---|---|---|---|---|---|
| | Lithium salt | | Organic solvent X | Nitrogen-containing ionic liquid Y | Volume ratio of X to Y | 25 °C | 60°C |
| | Material | Concentratio n | | | | | |
| Embodiment 1 | Lithium bis(fluorosulfonyl)imide | 2M | A-Ia | 1-Propyl-1-methylpyrrolidinium bis(fluorosulfonyl)imide | 3.0 : 7.0 | 689 | 509 |
| Embodiment 2 | Lithium bis(fluorosulfonyl)imide | 2M | A-Ia | - | - | 437 | 389 |
| Embodiment 3 | Lithium bis(fluorosulfonyl)imide | 2M | A-Ia | 1-Propyl-1-methylpyrrolidinium bis(fluorosulfonyl)imide | 1.0 : 9.0 | 539 | 410 |
| Embodiment 4 | Lithium bis(fluorosulfonyl)i mide | 2M | A-Ia | 1-Propyl-1-methylpyrrolidinium bis(fluorosulfonyl)imide | 2.5 : 7.5 (i.e. 1 : 3) | 559 | 413 |
| Embodiment 5 | Lithium bis(fluorosulfonyl)i mide | 2M | A-Ia | 1-Propyl-1-methylpyrrolidinium bis(fluorosulfonyl)imide | 3.3 : 6.7 (i.e. 1 : 2) | 645 | 501 |
| Embodiment 6 | Lithium bis(fluorosulfonyl)i mide | 2M | A-Ia | 1-Propyl-1-methylpyrrolidinium bis(fluorosulfonyl)imide | 4.0 : 6.0 | 629 | 489 |
| Embodiment 7 | Lithium bis(fluorosulfonyl)i mide | 2M | A-Ia | 1-Propyl-1-methylpyrrolidinium bis(fluorosulfonyl)imide | 5.0 : 5.0 | 576 | 461 |
| Embodiment 8 | Lithium bis(fluorosulfonyl)i mide | 2M | A-Ia | 1-Propyl-1-methylpyrrolidinium bis(fluorosulfonyl)imide | 7.0 : 3.0 | 543 | 449 |
| Embodiment 9 | Lithium bis(fluorosulfonyl)i mide | 2M | A-Ia | 1-Propyl-1-methylpyrrolidinium bis(fluorosulfonyl)imide | 9.0 : 1.0 | 432 | 424 |
| Comparative Example 1 | Lithium bis(fluorosulfonyl)i mide | 2M | Trimethyl phosphate | - | - | 89 | 77 |
| Comparative Example 2 | Lithium bis(fluorosulfonyl)i mide | 2M | Dimethoxydimethylsilane | - | - | 405 | 163 |
| Comparative Example 3 | Lithium bis(fluorosulfonyl)imide | 2M | Mixed solution of dimethoxydimethylsilane and trimethyl phosphate (volume ratio 5:5) | - | - | 406 | 367 |

In Table 1:
"-" means that no such a material is added or the parameter here is meaningless.
"2M" means that the amount of substance of the lithium salt is 2 mol/L.

As can be seen from Table 1, the organic solvent of the electrolyte solution in Comparative Example 1 includes a phosphate solvent (trimethyl phosphate), but the phosphate solvent does not contain a silicon atom. Since the organic solvent can react with the lithium metal, it is difficult to form a stable SEI film on the surface of the negative electrode plate, resulting in poor cycling performance of the battery.

The organic solvent of the electrolyte solution in Comparative Example 2 includes a siloxane solvent (dimethoxydimethylsilane). This type of solvent has high stability at room temperature, which is beneficial to improving the cycling performance of the battery. However, such a solvent has poor stability at high temperatures and the cycling performance of the battery decays rapidly.

Compared with Comparative Examples 1 and 2, in Comparative Example 3, a phosphate solvent and a siloxane solvent are mixed as an organic solvent of the electrolyte solution. The phosphate solvent can improve the thermal stability and has a certain improvement in terms of the high-temperature cycling performance of the battery, but the improvement effect still cannot meet the use requirements; and the organic solvent has limited effect on the improvement of the low-temperature cycling performance of the battery.

Compared with Comparative Example 3, in Embodiment 1 a phosphate compound containing a silicon-containing group was used as an organic solvent. The organic solvent can form a silicon-containing polymer on the surface of the negative electrode plate, which can improve the toughness of the SEI film. The SEI film does not easily break and can induce uniform deposition of the lithium metal. The SEI film has good stability, such as good reduction resistance, and can provide good protection for the negative electrode plate, thereby significantly improving the low-temperature and high-temperature cycling performance of the lithium metal battery.

Compared with Embodiment 1-1, in Embodiment 1, a nitrogen-containing ionic liquid Y (1-propyl-1-methylpyrrolidine bis(fluorosulfonyl)imide) is further added, which can combine with the organic solvent to have a flame retardant effect and is beneficial to further improve the cycling performance of the lithium metal battery. By adjusting the ratio of the phosphate compound to the nitrogen-containing ionic liquid Y or the type of the nitrogen-containing ionic liquid Y, the cycling performance of the lithium metal battery can be further improved.

### Embodiment 10 to Embodiment 18

A lithium metal battery was prepared by a method similar to that of Embodiment 1. The difference from Embodiment 1 was that the electrolyte solution components of Embodiments 10 to 18 are different from those of Example 1, and the materials of the organic solvents in the electrolyte solutions were different.

The test results are shown in Table 2.

**Table 2**

| Serial number | Electrolyte solution | | | | | Number of cycles of lithium metal battery | |
|---|---|---|---|---|---|---|---|
| | Lithium salt | | Organic solvent X | Flame retardant nitrogen-containing ionic liquid Y | Volume ratio of X to Y | 25°C | 60°C |
| | Material | Concentration | | | | | |
| Embodiment 1 | Lithium bis(fluorosulfonyl)imide | 2M | A-Ia | 1-Propyl-1-methylpyrrolidinium bis(fluorosulfonyl)imide | 3.0 : 7.0 | 499 | 459 |
| Embodiment 10 | Lithium bis(fluorosulfonyl)imide | 2M | A-Ib | 1-Propyl-1-methylpyrrolidinium bis(fluorosulfonyl)imide | 3.0 : 7.0 | 502 | 462 |
| Embodiment 11 | Lithium bis(fluorosulfonyl)imide | 2M | A-IIa | 1-Propyl-1-methylpyrrolidinium bis(fluorosulfonyl)imide | 3.0 : 7.0 | 537 | 478 |
| Embodiment 12 | Lithium bis(fluorosulfonyl)imide | 2M | A-IIc | 1-Propyl-1-methylpyrrolidinium bis(fluorosulfonyl)imide | 3.0 : 7.0 | 560 | 485 |
| Embodiment 13 | Lithium bis(fluorosulfonyl)imide | 2M | A-IIIa | 1-Propyl-1-methylpyrrolidinium bis(fluorosulfonyl)imide | 3.0 : 7.0 | 554 | 465 |
| Embodiment 14 | Lithium bis(fluorosulfonyl)imide | 2M | A-IIId | 1-Propyl-1-methylpyrrolidinium bis(fluorosulfonyl)imide | 3.0 : 7.0 | 569 | 468 |
| Embodiment 15 | Lithium bis(fluorosulfonyl)imide | 2M | A-IIIh | 1-Propyl-1-methylpyrrolidinium bis(fluorosulfonyl)imide | 3.0 : 7.0 | 625 | 520 |
| Embodiment 16 | Lithium bis(fluorosulfonyl)imide | 2M | A-IIIk | 1-Propyl-1-methylpyrrolidinium bis(fluorosulfonyl)imide | 3.0 : 7.0 | 745 | 610 |
| Embodiment 17 | Lithium bis(fluorosulfonyl)imide | 2M | B-2 | 1-Propyl-1-methylpyrrolidinium bis(fluorosulfonyl)imide | 3.0 : 7.0 | 589 | 510 |
| Embodiment 18 | Lithium bis(fluorosulfonyl)imide | 2M | C-2 | 1-Propyl-1-methylpyrrolidinium bis(fluorosulfonyl)imide | 3.0 : 7.0 | 537 | 460 |

It can be seen from Table 2 that the low-temperature and high-temperature cycling performance of the lithium metal batteries can be effectively regulated by regulating the types of phosphate compounds including the silicon-containing groups.

### Embodiment 19 to Embodiment 21

A lithium metal battery was prepared by a method similar to that of Embodiment 1. The difference from Embodiment 1 was that the electrolyte solution components of Embodiments 19 to 21 were different from those of Embodiment 1, and at least one of the material and concentration of the lithium salt in the electrolyte solution was adjusted.

The test results are shown in Table 3.

**Table 3**

| Serial number | Electrolyte solution | | | | | Number of cycles of lithium metal battery | |
|---|---|---|---|---|---|---|---|
| | Lithium salt | | Organic solvent X | Nitrogen-containing ionic liquid Y | Volume ratio of X to Y | 25°C | 60°C |
| | Material | Concentration | | | | | |
| Embodiment 19 | Lithium bis(fluorosulfonyl)imide | 1.8M | A-IIIk | 1-Propyl-1-methylpyrrolidinium bis(fluorosulfonyl)imide | 3.0 : 7.0 | 677 | 601 |
| Embodiment 20 | Lithium bis(fluorosulfonyl)imide | 2.2M | A-IIIk | 1-Propyl-1-methylpyrrolidinium bis(fluorosulfonyl)imide | 3.0 : 7.0 | 740 | 605 |
| Embodiment 21 | Lithium bis(fluorosulfonyl)imide | 4.0M | A-IIIk | 1-Propyl-1-methylpyrrolidinium bis(fluorosulfonyl)imide | 3.0 : 7.0 | 670 | 603 |

It can be seen from Table 3 that the low-temperature and high-temperature cycling performance of the lithium metal batteries can be effectively regulated by regulating at least one of the types and content of the lithium salts.

Although illustrative embodiments have been shown and described, those skilled in the art should understand that the above embodiments should not be construed as limitations on the present application, and that changes, substitutions and modifications may be made to the embodiments without departing from the spirit, principles and scope of the present application.

## Claims

1. An electrolyte solution for a lithium metal battery, comprising an organic solvent, wherein the organic solvent comprises a phosphate compound, the phosphate compound comprises a silicon-containing group and at least one phosphate group, and an oxygen atom of at least one phosphorus-oxygen single bond in the phosphate group is connected to a silicon atom of the silicon-containing group by a covalent single bond.

2. The electrolyte solution for a lithium metal battery according to claim 1, wherein at least one of the silicon-containing group and the phosphate group comprises an ether bond.

3. The electrolyte solution for a lithium metal battery according to claim 1 or 2, wherein the phosphate compound comprises a compound represented by Formula A, 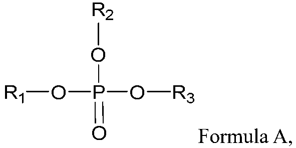 in Formula A,
R₁ to R₃ each independently comprise a substituted or unsubstituted alkyl group, a substituted or unsubstituted alkoxy group, a substituted or unsubstituted aryl group, a substituted or unsubstituted aryloxy group, a substituted or unsubstituted phosphoryl group, a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group;
wherein at least one of R₁ to R₃ comprises a substituted or unsubstituted silane, a substituted or unsubstituted siloxy group, a substituted or unsubstituted alkylsilyl group, a substituted or unsubstituted alkoxysilyl group, or a substituted or unsubstituted alkoxyalkylsilyl group.

4. The electrolyte solution for a lithium metal battery according to claim 3, wherein the compound represented by Formula A comprises at least one of a compound represented by Formula A-Ia to a compound represented by Formula A-IVb,

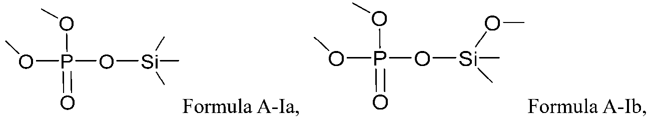

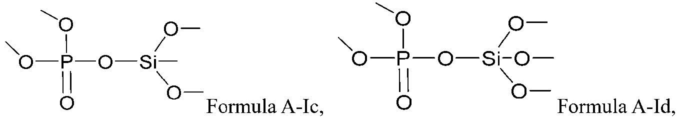

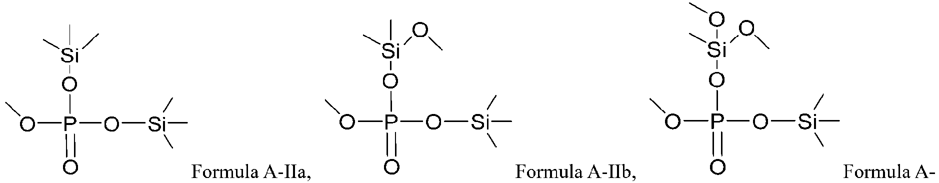

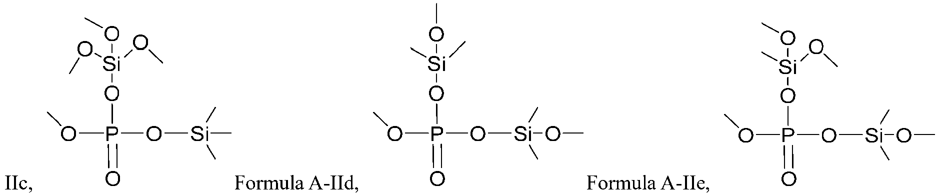

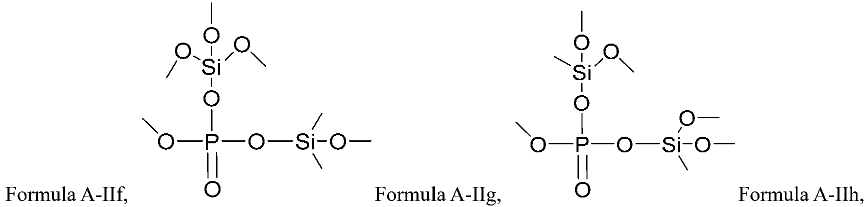

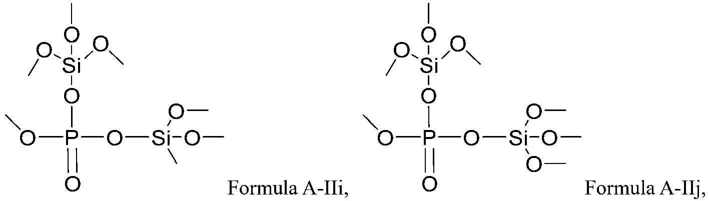

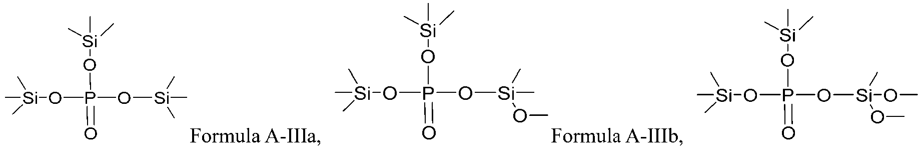

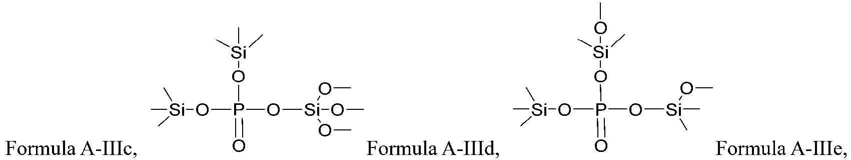

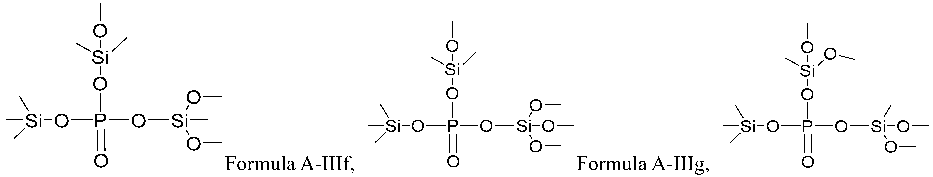

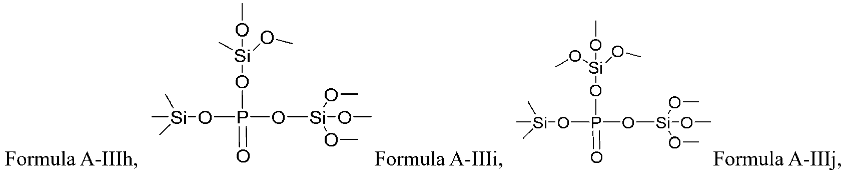

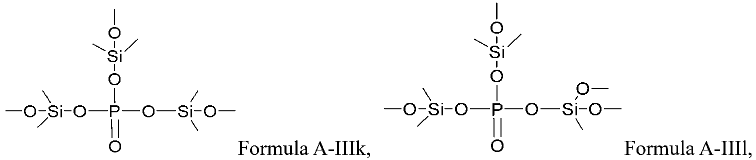

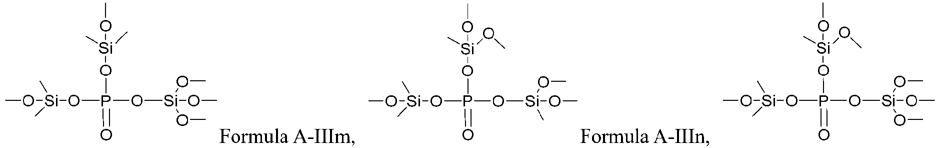

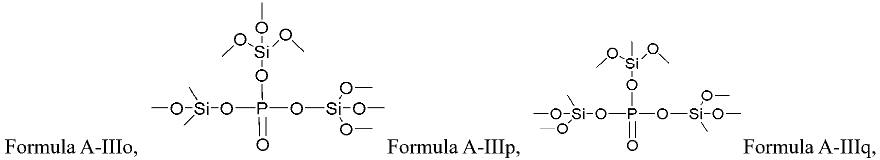

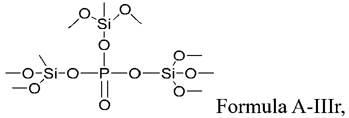

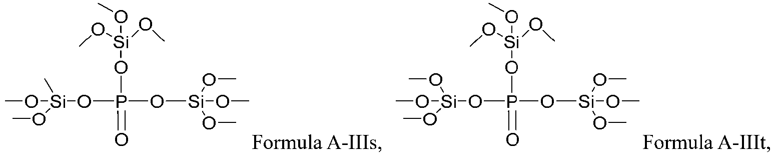

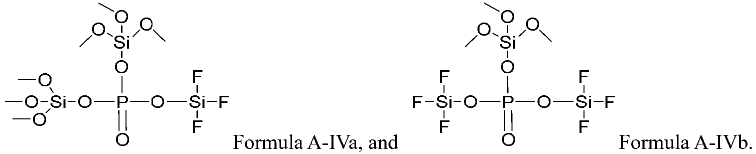

5. The electrolyte solution for a lithium metal battery according to any one of claims 1 to 4, wherein the phosphate compound comprises a compound represented by Formula B, 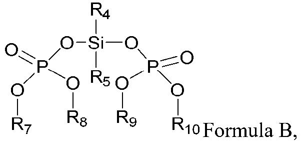 in Formula B,
R₄ and R₅ each independently comprise a phosphite group, a substituted or unsubstituted alkyl group, a substituted or unsubstituted alkoxy group, a substituted or unsubstituted aryl group, a substituted or unsubstituted aryloxy group, or a substituted or unsubstituted phosphoryl group;
R₇ to R₁₀ each independently comprise a substituted or unsubstituted alkyl group, a substituted or unsubstituted alkoxy group, a substituted or unsubstituted aryl group, a substituted or unsubstituted aryloxy group, or a substituted or unsubstituted phosphoryl group.

6. The electrolyte solution for a lithium metal battery according to claim 5, wherein the compound represented by Formula B comprises at least one of a compound represented by Formula B-1 to a compound represented by Formula B-6,

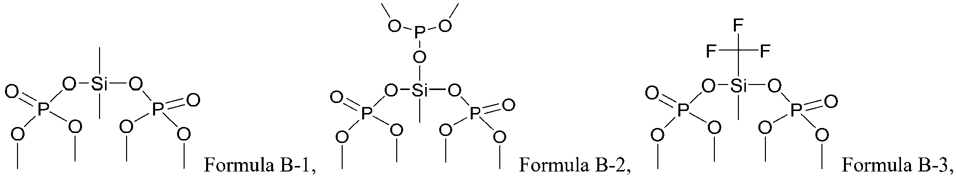

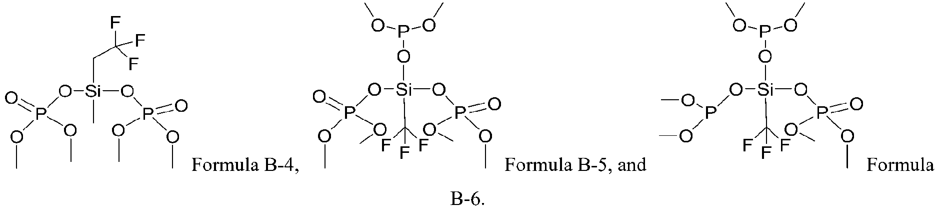

7. The electrolyte solution for a lithium metal battery according to any one of claims 1 to 6, wherein
the phosphate compound comprises a compound represented by Formula C, 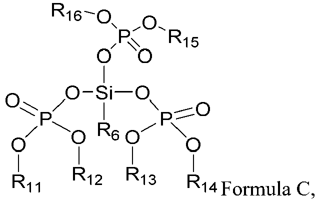
in Formula C, R₆ comprises a phosphite group, a substituted or unsubstituted alkyl group, a substituted or unsubstituted alkoxy group, a substituted or unsubstituted aryl group, a substituted or unsubstituted aryloxy group, or a substituted or unsubstituted phosphoryl group;
R₁₁ to R₁₆ each independently comprise a substituted or unsubstituted alkyl group, a substituted or unsubstituted alkoxy group, a substituted or unsubstituted aryl group, a substituted or unsubstituted aryloxy group, or a substituted or unsubstituted phosphoryl group.

8. The electrolyte solution for a lithium metal battery according to claim 7, wherein the compound represented by Formula C comprises at least one of a compound represented by Formula C-1 to a compound represented by Formula C-3,

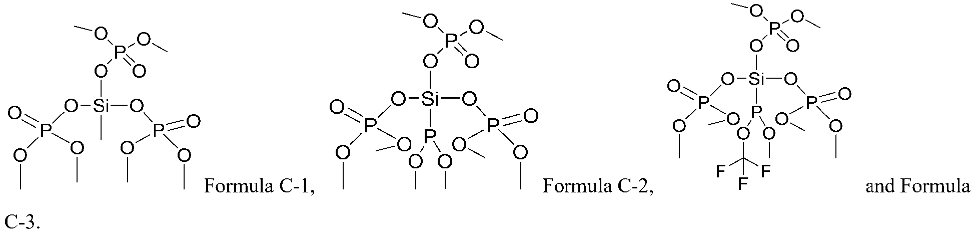

9. The electrolyte solution for a lithium metal battery according to any one of claims 1 to 8, wherein
based on the total volume of the electrolyte solution, the phosphate compound has a volume content of ≥ 9%; optionally, the volume content of the phosphate compound is 20% to 60%.

10. The electrolyte solution for a lithium metal battery according to any one of claims 1 to 9, wherein the organic solvent further comprises a nitrogen-containing ionic liquid;
optionally, the nitrogen-containing ionic liquid comprises cations and anions, the cation comprises at least one of an amine cation, an imidazolium cation, a piperidinium cation, and a pyridinium cation, and the anion comprises at least one of a trifluoromethylsulfonylimide anion, a bis(fluorosulfonyl)imide anion, and a difluoro(oxalato)borate anion.

11. The electrolyte solution for a lithium metal battery according to claim 10, wherein based on the total volume of the electrolyte solution, the ratio of the volume content of the phosphate compound to the volume content of the nitrogen-containing ionic liquid is 1 : (0.1 to 9); optionally 1 : (1 to 3).

12. The electrolyte solution for a lithium metal battery according to any one of claims 1 to 11, wherein the electrolyte solution further comprises a lithium salt, and the lithium salt comprises at least one of lithium bis(trifluoromethylsulfonyl)imide, lithium bis(fluorosulfonyl)imide and lithium difluoro(oxalato)borate;
the lithium salt has a molar concentration of 0.1 mol/L to 4 mol/L; optionally 1.8 mol/L to 2.2 mol/L.

13. A lithium metal battery, comprising the electrolyte solution for a lithium metal battery according to any one of claims 1 to 12.

14. The lithium metal battery according to claim 13, wherein the lithium metal battery further comprises a positive electrode plate, the positive electrode plate comprises a positive electrode current collector and a positive electrode film layer disposed on at least one side of the positive electrode current collector, the positive electrode film layer comprises a positive electrode active material comprising a compound of a composition formula of LiₐNi_{b}Co_{c}M_{d}O_{c}A_{f} and a modified compound thereof, wherein 0.8 ≤ a ≤ 1.2, 0.5 ≤ b < 1, 0 < c < 1, 0 < d < 1, 1 ≤ e ≤ 2, and 0 ≤ f ≤ 1, M comprises at least one of Mn, Al, Zr, Zn, Cu, Cr, Mg, Fe, V, Ti and B, and A comprises at least one of N, F, S and Cl.

15. The lithium metal battery according to claim 13 or 14, wherein the battery further comprises a negative electrode plate,
the negative electrode plate comprises a negative electrode current collector; or
the negative electrode plate comprises a negative electrode current collector and a negative electrode film layer disposed on at least one side of the negative electrode current collector, the negative electrode film layer comprises a lithium metal or a lithium metal alloy, the lithium metal alloy comprises a lithium metal and a non-lithium elementary substance, and the non-lithium elementary substance comprises at least one of tin, zinc, aluminum, magnesium, silver, gold, gallium, indium, foil, boron, carbon and silicon.

16. An electrical device, comprising the battery according to any one of claims 13 to 15.
